# EUROPÄISCHE PATENTANMELDUNG

(11) **EP 2 014 896 A2**
(43) Veröffentlichungstag der Anmeldung: **14.01.2009**
(21) Anmeldenummer: 08159830.2
(22) Anmeldetag: 07.07.2008
(51) Int. Cl.: F02C 6/16

(54) **Druckluftsystem zur Speicherung und Wiedergewinnung von Energie**

(30) Priorität: 09.07.2007 DE 102007032582
(71) Anmelder: Woronowicz, Ulrich, 13585 Berlin (DE)
(72) Erfinder: Woronowicz, Ulrich, 13585 Berlin (DE)
(74) Vertreter: Schneider, Henry

(57) **Zusammenfassung**

Die Erfindung betrifft ein Reihendruckluftantriebssystem zum Antreiben einer Kraft umsetzenden Maschine mittels eines unter Druck stehenden, aus mindestens einem Gas zusammengesetzten Gasgemischs, aufweisend einen Reihendruckluftantrieb, der eine Achse, einen Zylinder, Gasgemischzufuhrmittel und Gaszufuhrsteuermittel, Lagerungsmittel zum drehbaren Lagern der Antriebswelle und Mittel zum Abführen des verbrauchten Gasgemischs aufweist und wobei das Reihendruckluftantriebssystem zumindest einen Druckspeicher zur Speicherung des unter Druck stehenden Gasgemischs aufweist. Ferner betrifft die Erfindung ein System zur Speicherung und Wiedergewinnung von Energie, aufweisend Energie erzeugende Mittel, Energie speichernde Mittel und die die Energie aus dem Energie speichernden Mittel wiedergewinnenden Mittel.

Es ist vorgesehen, dass in dem Zylinder (6) des Reihendruckluftantriebssystems (1) an einer gemeinsamen Antriebswelle (8) ein schraubenförmiges, Kraft umsetzendes Triebwerk angeordnet ist, das jeweils zumindest einem Druckspeicher (11, 15) zur Speicherung des unter Druck stehenden Gasgemischs zugeordnet ist. Die Einrichtung des erfindungsgemäßen Reihendruckluftantriebssystems ist vorzugsweise in einem stillgelegten Bergwerk vorgesehen.

## Beschreibung

Die Erfindung betrifft ein Reihendruckluftantriebssystem mit den im Oberbegriff des Anspruchs 1 genannten Merkmalen und ein System zur Speicherung und Wiedergewinnung von Energie mit den im Oberbegriff des Anspruchs 12 genannten Merkmalen.

Es ist bekannt, dass die in modernen Kraftwerken gleich welcher Bauart erzeugte elektrische Energie infolge des Nacht- und Tageswechsels nicht gleichmäßig gebraucht wird, sondern abhängig von dem industriellen Bedarf und dem häuslichen Bedarf der Bevölkerung höher und niedriger im zeitlichen Ablauf anfällt. Dies versucht man durch Hoch- und Herunterfahren der Erzeugungsleistung der Kraftwerke abzufangen, um nicht unnötig Energie zu erzeugen, wenn sie gerade weniger oder nicht gebraucht wird. Da es aber große Kraftwerke sind, die zu steuern sind und ihre Betriebsprozesse entweder gar nicht abschaltbar, wie bei Atomkraftwerken, oder ständig eine Mindestlaufleistung aufweisen müssen, gelingt es nicht ganz, die Energieverluste infolge der ungleichmäßigen Kraftwerksauslastung zu vermeiden. Daher ist es ein ausgesuchtes Ziel der Entwicklung vergangener Jahrzehnte, Systeme zur Zwischenspeicherung der Energie zu entwickeln, die diese ungebrauchte Energie zwischenlagern könnten, um sie dann zu Zeiten des hohen Energiebedarfs wieder in das die Energie zuführende Netz einzuspeisen. Hierbei sind selbstverständlich die wirtschaftlichen Faktoren und Fragen der Machbarkeit vordergründig von Bedeutung. Insbesondere die umweltfreundlichen Technologien wie Solarenergie und die Windkraftenergie unterliegen zusätzlich Schwankungen, welche die Natur selbst setzt, da witterungsbedingt nicht immer ausreichend starker Wind für die Windkraftwerke und ausreichend Sonne für die Solarkraftwerke zur Verfügung steht. Hierbei ist die Möglichkeit der Energiezwischenspeicherung von besonderem Wert, wenn man diese beiden umweltschonendsten Energiegewinnungs-Technologien ununterbrochen durch Witterungseinflüsse nutzen will. Bekannt sind die hierzu verwendeten Wärmespeicher zur Gewinnung von Warmwasser für Heizungssysteme oder Heißwasserzubereitung in den Haushalten, in dem das erwärmte Wasser in wärmeisolierten Behältern über mehrere Tage warm bleibt. Diese Art der Zwischenspeicherung ist brauchbar, aber sie kann den Anforderungen nicht sehr dynamisch angepasst werden und sie liefert ihre Energie nicht als einen elektrischen Strom ins Netz zurück. Ferner weist sie natürlich in einem Ausmaß auch Wärmeverluste auf.

In der DE 41 39 734 A1 ist vorgeschlagen worden, alte Bergwerke als Behälter für hochkomprimierte Luft als Energiespeicher zu verwenden, in welchen aufgrund des großen zur Verfügung stehenden Volumens der inzwischen nicht mehr genutzten Bergwerke entsprechend viel Energie durch die darin komprimierte Luft gespeichert werden kann. Zur Komprimierung wurden Kolbenzylinderwerke vorgeschlagen, die in großen, in den Bergwerksstollen und Schächten vertikal und horizontal zu verlegenden Rohren mit langen Kolbenstangen angetrieben werden. Die vorgeschlagene Kolbenzylinderlösung stellt ein praktisches Realisierungsproblem dar, das sich durch die Größe der Zylinderrohre und Kolben ergibt.

Es sind ferner Kraftmaschinen bekannt, die die Energie eines komprimierten Gasgemischs, zumeist der atmosphärischen Luft, seltener einer anderen Zusammensetzung, die zum Beispiel Stickstoff enthält, in die mechanische Energie umsetzen. Es können hierzu den Verbrennungsmotoren ähnliche Kraftmaschinen verwendet sein, die Zylinder, Kolben, Kurbelwellen, Ventile etc. aufweisen, die zum Beispiel ein Fahrzeug besonders umweltfreundlich antreiben, oder aber pneumatische Werkzeuge, wie Presslufthammer und Schrauber antreiben. Diese Kraft umsetzenden Konstruktionen sind als Anwendung für eine Kraftmaschine großer Leistung, wie sie zu Zwecken der Energiegewinnung benötigt sind, wegen deren Komplexität und Anfälligkeit sowie niedrigem Wirkungsgrad nur unter Nachteilen verwendbar.

Der Erfindung liegt die Aufgabe zugrunde, eine Kraft umsetzende Maschine bzw. ein Kraft umsetzendes Triebwerk vorzuschlagen, die/das insbesondere zur Anwendung in Bergwerken geeignet ist, und welche die Rückgewinnung der Energie aus der in einem Druckluftspeicher unter Druck stehenden komprimierten Luft effizienter und wirtschaftlicher ausführt.

Eine weitere Aufgabe der vorliegenden Erfindung ist es, geeignete Großraumbehälter für die komprimierte Luft vorzuschlagen, deren Herstellung und Betrieb besonders wirtschaftlich sind.

Dadurch, dass erfindungsgemäß eine Vielzahl von Kraft umsetzenden Maschinen an einer Welle hintereinander angeordnet ist, und jede Kraft umsetzende Maschine getrennt an zumindest einen Speicher zur Speicherung komprimierter Luft angeschlossen ist, und die einzelnen Kraft umsetzenden Maschinen einzeln und getrennt steuerbar sind, ist es möglich, die aus dem aus vielen Druckluftspeichern bestehenden Energiespeichersystem abzurufende Energiemenge in einem großen Wertebereich variabel und schnell in die mechanische Energie in Form eines an der gemeinsamen Welle der Anordnung anstehenden Drehmoments zur Verfügung zu stellen. Diese mechanische Energie wird dann über die gleiche gemeinsame Welle an zumindest einen konventionellen Stromgenerator direkt oder über einen dazwischengeschalteten Kopplungsmechanismus konventioneller Art übertragen, wo aus der mechanischen Energie elektrischer Strom erzeugt und unmittelbar in ein Stromnetz eingespeist wird.

In bevorzugter Ausgestaltung der Erfindung ist das erfindungsgemäße Reihendruckluftantriebssystem zum Antreiben einer Kraftumsetzmaschine mittels eines unter Druck stehenden, aus mindestens einem Gas zusammengesetzten Gasgemischs, aufweisend einen Reihendruckfuftantrieb, der eine Achse, einen Zylinder, Gasgemischzufuhrmittel und Gaszufuhrsteuermittel, Lagerungsmittel zum drehbaren Lagern der Antriebswelle, einen Rotor mit einer Vielzahl von gegenüber der Achse unter einem Winkel schräggestellten Flächen und Mittel zum Abführen des verbrauchten Gasgemischs aufweist und wobei das Reihendruckluftantriebssystem zumindest einen Druckspeicher zur Speicherung des unter Druck stehenden Gasgemischs aufweist, dadurch umgesetzt, dass in dem Zylinder an einer gemeinsamen Antriebswelle zumindest ein Kraft umsetzendes Triebwerk angeordnet ist, das jeweils zumindest einem Druckspeicher zur Speicherung des unter Druck stehenden Gasgemischs zugeordnet ist, aus welchem das unter Druck stehende Gasgemisch über in mehreren, entlang der Achse des Reihendruckluftantriebs angeordneten Ebenen angeordnete Rohrleitungen über eine Vielzahl von Gasgemischzufuhrmitteln in den Zylinder einströmt.

In einer bevorzugten Ausführung der vorliegenden Erfindung zeichnet sich das erfindungsgemäße Reihendruckluftantriebssystem dadurch aus, dass der Zylinder vorzugsweise senkrecht in einem Bergwerksschacht angeordnet und über mehrere Bergwerksebenen in die Erdtiefe erstreckt ist, wobei in einer Bergwerksebene jeweils zumindest ein Druckspeicher zur Speicherung des unter Druck stehenden Gasgemischs eingerichtet ist.

Ferner bilden in einer besonders bevorzugten Ausführung der vorliegenden Erfindung die gegenüber der Achse unter einem Winkel schräg gestellten Flächen des Rotors des Reihendruckluftantriebs eine Schraubenform. Hierdurch kann der erfindungsgemäße Antrieb nahezu beliebig in die Länge ausgebaut werden, wobei die Luftströmung erfindungsgemäß in mehreren entlang der Achse der Antriebswelle angeordneten Ebenen über eine Vielzahl von Düsen zugeführt ist, wodurch in jedem Abschnitt des Rotors des Reihendruckluftantriebs ausreichende Luftdruck- und Strömungsbedingungen vorliegen, die für eine effektive Kraftumsetzung notwendig sind. Zur gleichen Zeit kann die verbrauchte Luft durch die in dem Zylinder durch die schraubenförmig ausgebildeten, gegenüber der Achse unter einem Winkel schräg gestellten Flächen des Rotors des Reihendruckluftantriebs mitrotierenden Hohlräume vorzugsweise zu einem Ende des Zylinders geleitet sein und dort über zumindest ein Mittel zum Abführen des verbrauchten Gasgemischs in die Atmosphäre entweichen.

In einer weiteren Ausführung der vorliegenden Erfindung sind die Gasgemischzufuhrmittel in Form von Düsen unter einem wirkungsoptimierten Winkel jeweils in axialer und radialer Richtung gegenüber der Drehachse des Reihendruckluftantriebs angeordnet, wodurch es möglich ist, den Wirkungsgrad der erfindungsgemäßen Kraft umsetzenden Maschine zu optimieren.

Hierbei wird erfindungsgemäß in einer bevorzugten Ausführung der Druckspeicher zur Speicherung des unter Druck stehenden Gasgemischs in dem Körper eines ausgedienten Schiffswracks eingerichtet, wobei hierzu Mittel und Maßnahmen zum Abdichten gegen Gasgemischlecks und zum Erhöhen der Festigkeit der Schiffskonstruktion derart ausgeführt sind, dass es sich als ein Hochdruckgasgemischspeicher eignet. Dadurch werden ausgediente Schiffe einer wirtschaftlichen Weiternutzung zugeführt und durch sie Energiespeicher ermöglicht, die auf beliebigen Wasserwegen einfach transportierbar sind und sowohl in Küstennähe als auch auf offener See zu großen Energiespeichern zusammengeschaltet werden können. Ferner kann in einer weiteren bevorzugten Ausführung der vorliegenden Erfindung das als Druckspeicher zur Speicherung des unter Druck stehenden Gasgemischs verwendete Schiffswrack das eines einstigen U-Boots sein, weil diese planmäßig stillgelegt werden und besonders im Falle von Atom-U-Booten kostenintensiv entsorgt werden müssen. Durch die friedliche Nutzung sind sie wirtschaftlicher weiterverwendet und die Umsetzung in einen Druckluftspeicher ist besonders einfach, da ein U-Boot bereits für einen hohen Druck von außen bautechnisch ausgelegt und gut abgedichtet ist und nun nur noch relativ wenig Umbau benötigt, um einem in seinem Inneren aufgebauten Überdruck dauerhaft standzuhalten. In Anbetracht des oben Beschriebenen ergibt sich bei der Verwendung von U-Booten als Druckspeicher ein weiterer Vorteil dadurch, dass solche Druckspeicher auch unter Wasser in mehreren Ebenen über- und nebeneinander zu großen Energiespeichern zusammengeschaltet sein können, wo von verfügbarem Volumen der Meere und Ozeane her unbegrenzt Platz hierfür zur Verfügung steht, der im Vergleich zu Landgrundstücken nichts kostet und im Gegensatz zu Druckspeichern aus Schiffen an der Wasseroberfläche keine Probleme durch stürmisches Seewetter aufkommen dürften.

Nach einer noch weiteren Ausführung vorliegender Erfindung ist der Druckspeicher zur Speicherung des unter Druck stehenden Gasgemischs in den Räumen ausgedienter unterirdischer Bunker und Tunnel eingerichtet. Solche ausgedienten Bauwerke liegen brach, verursachen Instandhaltungskosten und befinden sich oft in der Nähe von Industrieballungsräumen, wo sie ortsnah und kostensparend als Energiespeicher in ein übergeordnetes System eingebunden sein können.

In dem erfindungsgemäßen Reihendruckluftantriebssystem sind die Gasgemischzufuhrmittel und Mittel zum Abführen des verbrauchten Druckgasgemischs in einem beliebigen Winkel in Bezug auf die Zylinderachse an dem Umfang des Zylinders angeordnet, wodurch es möglich ist, die an einer Antriebswelle in Reihe angeordneten Kraft umsetzenden Maschinen unabhängig voneinander zu positionieren, sowie die Bergwerksebenen bekanntlich in der Praxis unter beliebigen Winkeln zu dem Schacht zulaufen können.

Vorzugsweise sind die Gasgemischzufuhrmittel und Mittel zum Abführen des verbrauchten Gasgemischs lediglich durch Öffnungen in der Außenwand des Zylinders ausgebildet. Die Steuerung der Druckluftzufuhr erfolgt in diesem Fall durch die weiter unten beschriebenen, drehbar angeordneten Druckplatten, die diese Öffnungen beim Rotieren mit ihren Außenkanten auf- oder zudecken.

Erfindungsgemäß weist das Kraft umsetzende Triebwerk einen Rotor auf, auf dem kreisumlaufend und in Bezug auf die Drehachse eine Vielzahl schräg gestellter, angewinkelter Druckplatten angeordnet ist, in welchen stufenartig angeordnete Muldenaushöhlungen ausgebildet sind, wobei die Druckplatten mit ihren äußeren, zur Innenwand des Zylinders zugewandten Kanten beim Drehen des Triebwerks eine zumindest eine in der Zylinderwand ausgebildete Einlassöffnung derart öffnen und schließen, dass auf der einen Seite jeder Druckplatte in Umlaufrichtung jeweils der Druck des zugeführten unter Druck stehenden Gasgemischs herrscht, während auf der anderen Seite der jeweiligen Druckplatte ein geminderter Druck herrscht, der sich infolge der Verbindung dieses Hohlraums mit dem atmosphärischen Druck einstellt.

Das erfindungsgemäße System zur Speicherung und Wiedergewinnung von Energie, aufweisend die Energie erzeugenden Mittel, Energie speichernde Mittel und die die Energie aus dem Energie speichernden Mittel wiedergewinnende Mittel, verwendet als die Energie erzeugenden Mittel vorzugsweise Stromerzeugungsquellen, als die Energie speichernden Mittel Behälter zur Aufnahme von unter Druck stehendem Gasgemisch und das aus dem Energie speichernden Mittel die Energie wiedergewinnende Mittel ein Reihendruckluftantriebssystem wie in den obigen bevorzugten Ausbildungen der vorliegenden Erfindung. Das macht das erfindungsgemäße System universell in einem bestehenden Netz aus Kraftwerken verschiedener Bauarten einsetzbar. Bevorzugt jedoch kann das erfindungsgemäße System zur Speicherung und Wiedergewinnung von Energie als Stromerzeugungsquellen Windkraftwerke oder Solarkraftwerke verwenden, weil dadurch deren nachteiligen Eigenschaft witterungsabhängig zu sein, nachhaltig und gleichsam umweltschonend abgeholfen wird.

Die in den unter Druck stehenden Gasgemischspeichern als das Gasgemisch vorzugsweise verwendete atmosphärische Luft kann außerdem einer Luftreinigung durch Filter und Katalysatoren unterzogen werden, bevor sie zur Energierückgewinnung wieder in die Atmosphäre entlassen wird, dann würde zugleich durch die erfindungsgemäße Energieerzeugung und Nutzung nach vorliegender Erfindung die atmosphärische Luft von den kritischsten belastenden Stoffen befreit und ein zusätzlicher Effekt zur Erhaltung der Umwelt würde auf eine sehr preiswerte Art und Weise wirksam sein.

Weitere bevorzugte Ausgestaltungen der Erfindung ergeben sich aus den übrigen, in den Unteransprüchen genannten Merkmalen.

Mit der vorliegenden Erfindung entsteht nebst bereits aufgezählter Vorteile ein weiterer Vorteil dadurch, dass durch die Nutzung unterirdischer brachliegender Bergwerke als Druckspeicher die Bodenstabilität erhöht wird, was bekanntlich in entsprechenden Bergwerksregionen als das Problem der unberechenbaren Bodenabsenkung Schäden an Gebäuden und Straßen verursacht. Ferner ist das erfindungsgemäße Reihendruckluftantriebssystem und Reihendruckluftantrieb durch deren Unterbringung in unterirdischen Schächten und Aushöhlungen an der Erdoberfläche fast oder gar nicht hörbar, wodurch sie zu einer weiteren Zunahme des durch die Industrie erzeugten Geräuschpegels nicht beitragen.

Die Erfindung wird nachfolgend in Ausführungsbeispielen anhand der zugehörigen Zeichnungen erläutert. Es zeigen:
- Figur 1: eine schematische Darstellung des erfindungsgemäßen Reihendruckluftantriebssystems mit dem erfindungsgemäßen Reihendruckluftantrieb;
- Figur 2: eine vergrößerte schematische Darstellung des erfindungsgemäßen Reihendruckluftantriebssystems mit dem erfindungsgemäßen Reihendruckluftantrieb, und
- Figur 3: eine Querschnittsansicht durch den erfindungsgemäßen Reihendruckluftantrieb.

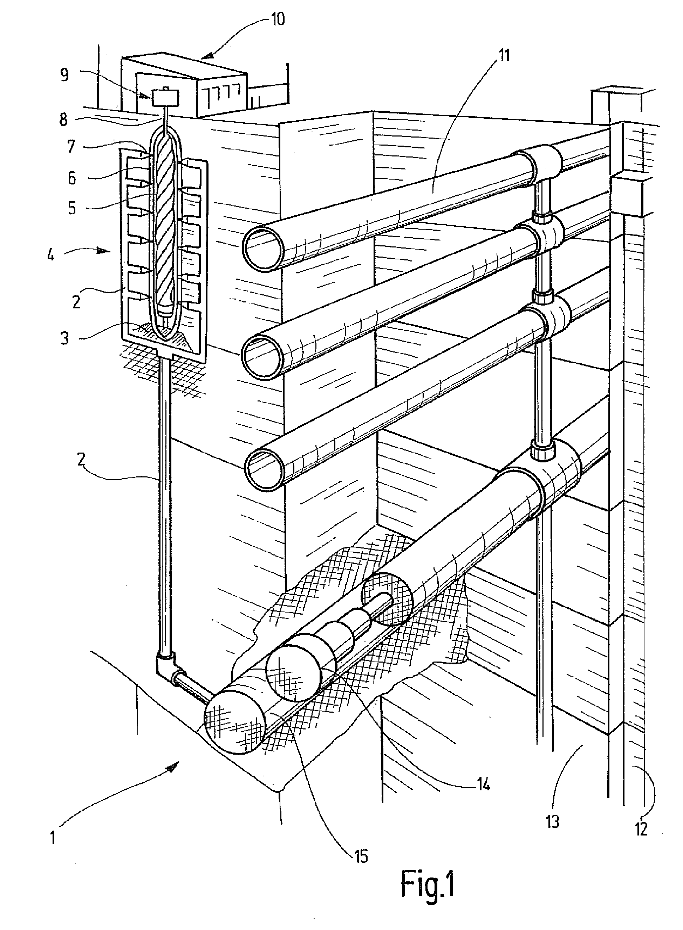

Figur 1 zeigt eine schematische Darstellung des erfindungsgemäßen Reihendruckluftantriebssystems 1 mit dem erfindungsgemäßen Reihendruckluftantrieb 4 in einer Querschnittsansicht, die ein ins Erdinnere reichendes verzweigtes Schachtsystem offen legt, in dem die Druckspeicher 11, 15 vorzugsweise in Form von Rohren verlegt und miteinander verbunden sind.

In einigen dieser Druckspeicher 15 kann ein Pumpantrieb durch einen Kolben 14, wie in dem obigen Stand der Technik beschrieben, zum Erzeugen der komprimierten Druckluft eingerichtet sein, wobei die ihn mechanisch antreibenden Mittel nicht abgebildet sind.

Die in dem Druckspeicher 11, 15 vorkomprimierte Luft wird mittels zumindest einer Druckrohrleitung 2 dem Reihendruckluftantrieb 4 zugeführt, wobei die Druckrohrleitung 2 um den vorzugsweise vertikal angeordneten Zylinder 6 herum verzweigt ist und mittels der in mehreren Ebenen um den Zylinder 6 radial angeordneter Gasgemischzufuhrmitteln 7 oder der Düsen 7 die vorkomprimierte, unter Druck stehende Luft in den Zylinder 6 zuführt.

Die vorkomprimierte Luft strömt gleichzeitig aus der Vielzahl von Düsen 7 ins Innere des Zylinders 6 ein, wo sie auf die gegenüber der Achse 8 schräg gestellten Flächen des Rotors 5 trifft und ihn in der gleichen Art und Weise wie einen Propeller oder eine Turbine antreibt.

Hierbei ist die Vielzahl der Düsen 7 lediglich beispielhaft in einem rechten Winkel gegenüber dem Zylinder 6 angeordnet, was in einer weiteren bevorzugten Ausführung (ohne Abbildung) unter einem vorteilhaft vorbestimmten anderen Neigungswinkel der Düsen 7 gegenüber dem Zylinder 6 umgesetzt sein kann.

Der vorzugsweise vertikal angeordnete Rotor 5 ist mit seiner Achse 8 an dem unteren Ende in einem Lagerungsmittel 3 gelagert, das so gut wie das gesamte Gewicht des Rotors 5 aufnimmt. Das Lagerungsmittel 3 hat hierdurch in radialer Richtung nur relativ geringe Kräfte zu tragen, die außerdem symmetrisch an dem Umfang des Antriebswellenschafts verteilt sind und kann an der unteren Lagerungsstelle genauso dimensioniert ausgeführt sein wie an der oberen Lagerungsstelle. Zur Aufnahme der Gewichtskraft des Rotors 5 weist das Lagerungsmittel 3 ein weiteres, axial wirkendes Lager auf (nicht gesondert dargestellt), das entsprechend für das zu tragende Gewicht des Rotors 5 ausgelegt ist. Das rein axial wirkende Lager des Lagerungsmittels 3 kann eine nahezu beliebig große Auflagefläche aufweisen, wodurch der Flächendruck zwischen den beteiligten Lagerflächen reduziert und in einem größeren Bereich vorgegeben werden kann. Auch eine zusammengesetzte Wirkung beider Lager kann in einem Lager mit den Mitteln des Standes der Technik ausgeführt sein.

Die aus der Vielzahl von Düsen 7 in den Zylinder 6 einströmende Luft wird durch die in dem Zylinder 6 durch die schraubenförmig ausgebildeten, gegenüber der Achse 8 unter einem Winkel schräg gestellten Flächen des Rotors 5 des Reihendruckluftantriebs 4 mitrotierenden Hohlräume vorzugsweise zu dem oberen Ende des Zylinders 6 geleitet und kann dort über zumindest ein Mittel zum Abführen des verbrauchten Gasgemischs (nicht dargestellt) in die Atmosphäre entweichen.

An der so durch die vorkomprimierte Luft angetriebene Antriebswelle 7 wird beispielsweise oberirdisch zumindest ein Elektrogenerator 9 in dem Kraftwerk 10 mechanisch angeschlossen, wobei er sowohl gewichtsentkoppelt in einer eigenen Lagerung gelagert sein kann, als auch vorteilhaft mit seinem Gewicht auf der Antriebswelle 8 aufliegen und dadurch zusammen mit dem Rotor 5 in dem unteren, axial wirkenden Lager des Lagerungsmittels 3 gelagert sein kann.

Die in dem Kraftwerk 10 erzeugte elektrische Stromenergie ist dadurch eine aus der in der vorkomprimierten Druckluft in dem erfindungsgemäßen Reihendruckluftantriebssystem 1 zwischengespeicherten Energie wiedergewonnene Stromenergie, die unmittelbar mit ihrer Erzeugung dem allgemeinen Stromnetz zugeführt wird.

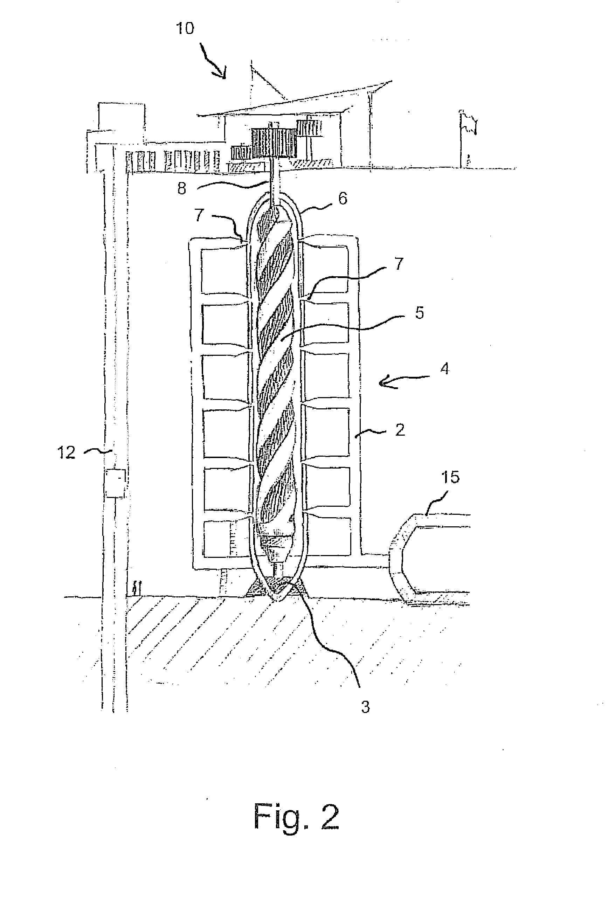

Figur 2 zeigt schematisch in einer Querschnittsansicht eine vergrößerte Darstellung des erfindungsgemäßen Reihendruckluftantriebssystems 1 mit dem erfindungsgemäßen Reihendruckluftantrieb 4 aus Figur 1, um die wesentlichen Details des Reihendruckluftantriebs 4 deutlicher aufzuzeigen.

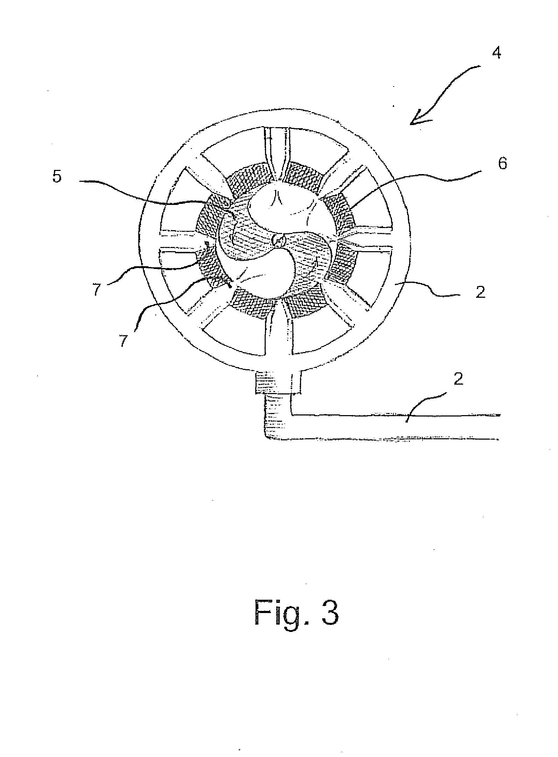

Figur 3 zeigt eine schematische Querschnittsansicht des erfindungsgemäßen Reihendruckluftantriebs 4 in einer Draufsicht, wobei vor allem eine hierbei beispielsweise gleichmäßige symmetrische Verteilung einer Vielzahl von Düsen 7 um den Zylinder 6 herum zu sehen ist. Ferner ist zu sehen, dass die gegenüber der Achse 8 unter einem Winkel schräg gestellten Flächen des Rotors 5 des Reihendruckluftantriebs 4 eine gewölbt ausgebildete Oberfläche aufweisen, die jeweils auf einer Seite des Rotorblatts konkav bzw. konvex geformt ist, und beim Rotieren des Rotors 5 die Düsen 7 abdecken, wobei jedoch kein Berührungskontakt zustande kommt, sondern lediglich ein möglichst kleiner Luftspalt dafür sorgt, dass der Luftstrom über die vorübergehend abgedeckte Düse 7 fast unterbrochen ist. Auch hierbei ist die gezeigte symmetrische Anordnung der Düsen 7 in Bezug auf den Zylinder 6 und den Rotor 5 in einem hauptsächlich rechten Winkel lediglich eine beispielhafte, was jedoch keine Einschränkung hierauf vermitteln soll. In einer anderen Ausführung der vorliegenden Erfindung können die Düsen 7 unter einem anderen Winkel in Bezug auf den Zylinder 6 und den Rotor 5 angeordnet sein, um hierdurch den Wirkungsgrad der erfindungsgemäßen Kraft umsetzenden Maschine zu optimieren.

Die vorangehenden Ausführungen der vorliegenden Erfindung sind lediglich beispielhaft und nicht als die vorliegende Erfindung begrenzend auszulegen. Die vorliegende Erfindungslehre kann leicht auf andere Typen von Vorrichtungen und Anwendungen übertragen werden. Die Beschreibung des Ausführungsbeispiels ist vorgesehen, anschaulich zu sein und nicht, um den Schutzbereich der Patentansprüche einzuschränken. Viele Alternativen, Modifikationen und Varianten sind für einen durchschnittlichen Fachmann offensichtlich, ohne dass er hierfür den Schutzumfang der vorliegenden Erfindung verlassen müsste, der in den angehängten Ansprüchen definiert ist.

### BEZUGSZEICHENLISTE

- 1: Reihendruckluftantriebssystem
- 2: Druckrohrleitung
- 3: Lagerungsmittel
- 4: Reihendruckluftantrieb
- 5: Rotor
- 6: Zylinder
- 7: Gasgemischzufuhrmittel, Düse
- 8: Achse, Antriebswelle
- 9: Elektrogenerator
- 10: Kraftwerk
- 11: Druckspeicher
- 12: Schacht
- 13: Erdschichten
- 14: Kolben
- 15: Druckspeicher

## Patentansprüche

1. Reihendruckluftantriebssystem zum Antreiben einer Kraftumsetzmaschine mittels eines unter Druck stehenden, aus mindestens einem Gas zusammengesetzten Gasgemischs, aufweisend einen Reihendruckluftantrieb, der eine Achse, einen Zylinder, Gasgemischzufuhrmittel und Gaszufuhrsteuermittel, Lagerungsmittel zum drehbaren Lagern der Achse, einen Rotor mit einer Vielzahl von gegenüber der Achse unter einem Winkel schräg gestellten Flächen und Mitteln zum Abführen des verbrauchten Gasgemischs aufweist und wobei das Reihendruckluftantriebssystem zumindest einen Druckspeicher zur Speicherung des unter Druck stehenden Gasgemischs aufweist, **dadurch gekennzeichnet, dass** in dem Zylinder (6) an einer gemeinsamen Antriebswelle (8) zumindest ein Kraft umsetzendes Triebwerk (4) angeordnet ist, das jeweils zumindest einem Druckspeicher (11, 15) zur Speicherung des unter Druck stehenden Gasgemischs zugeordnet ist, aus welchem das unter Druck stehende Gasgemisch über in mehreren, entlang der Achse (8) des Reihendruckluftantriebs (4) angeordneten Ebenen angeordnete Druckrohrleitungen (2) über eine Vielzahl von Gasgemischzufuhrmitteln (7) in den Zylinder (6) einströmt.

2. Reihendruckluftantriebssystem nach Anspruch 1, **dadurch gekennzeichnet, dass** der Zylinder (6) vorzugsweise senkrecht in einem Bergwerksschacht angeordnet und über mehrere Bergwerksebenen in die Erdtiefe erstreckt ist, wobei in zumindest einer Bergwerksebene jeweils zumindest ein Druckspeicher (11, 15) zur Speicherung des unter Druck stehenden Gasgemischs eingerichtet ist.

3. Reihendruckluftantriebssystem nach Anspruch 1, **dadurch gekennzeichnet, dass** die gegenüber der Achse (8) unter einem Winkel schräg gestellten Flächen des Rotors (5) des Reihendruckluftantriebs (4) eine Schraubenform ausbilden.

4. Reihendruckluftantriebssystem nach Anspruch 1, **dadurch gekennzeichnet, dass** die Gasgemischzufuhrmittel (7) unter einem wirkungsoptimierten Winkel jeweils in axialer und radialer Richtung gegenüber der Drehachse (8) des Reihendruckluftantriebs (4) angeordnet sind.

5. Reihendruckluftantriebssystem nach Anspruch 1, **dadurch gekennzeichnet, dass** der Druckspeicher (11, 15) zur Speicherung des unter Druck stehenden Gasgemischs in dem Körper eines ausgedienten Schiffswracks eingerichtet ist, wobei hierzu Mittel und Maßnahmen zum Abdichten gegen Gasgemischlecks und zum Erhöhen der Festigkeit der Schiffskonstruktion derart ausgeführt sind, dass es sich als ein Hochdruckgasgemischspeicher eignet.

6. Reihendruckluftantriebssystem nach Anspruch 5, **dadurch gekennzeichnet, dass** das als Druckspeicher (11, 15) zur Speicherung des unter Druck stehenden Gasgemischs verwendete Schiffswrack, das eines einstigen U-Boots ist.

7. Reihendruckluftantriebssystem nach Anspruch 1, **dadurch gekennzeichnet, dass** der Druckspeicher (11, 15) zur Speicherung des unter Druck stehenden Gasgemischs in den Räumen ausgedienter unterirdischer Bunker und Tunnel eingerichtet ist.

8. Reihendruckluftantriebssystem nach einem der vorhergehenden Ansprüche, **dadurch gekennzeichnet, dass** die Gasgemischzufuhrmittel (7) und Mittel zum Abführen des verbrauchten Gasgemischs jeweils in einem beliebigen Winkel in radialem Bezug auf die Zylinderachse an dem Umfang des Zylinders (6) angeordnet sind.

9. Reihendruckluftantriebssystem nach Anspruch 8, **dadurch gekennzeichnet, dass** die Gaszufuhrmittel und Mittel zum Abführen des verbrauchten Gasgemischs durch Öffnungen in der Außenwand des Zylinders (6) ausgebildet sind.

10. Reihendruckluftantriebssystem nach einem der vorhergehenden Ansprüche, **dadurch gekennzeichnet, dass** das Kraft umsetzende Triebwerk (4) einen Rotor (5) aufweist, auf dem kreisumlaufend schräg in Bezug auf die Drehachse eine Vielzahl angewinkelter Druckplatten angeordnet ist, in welchen stufenartig angeordnete Muldenaushöhlungen ausgebildet sind, wobei die Druckplatten mit ihren äußeren, zur Innenwand des Zylinders (6) zugewandten Kanten beim Drehen des Triebwerks eine zumindest eine in der Zylinderwand ausgebildete Einlassöffnung derart öffnen und schließen, dass auf der einen Seite jeder Druckplatte in Umlaufrichtung jeweils der Druck des zugeführten unter Druck stehenden Gasgemischs herrscht, während auf der anderen Seite der jeweiligen Druckplatte ein geminderter Druck herrscht, der sich infolge der Verbindung dieses Hohlraums mit dem atmosphärischen Druck einstellt.

11. Reihendruckluftantriebssystem nach einem der vorhergehenden Ansprüche, **dadurch gekennzeichnet, dass** das verwendete Gasgemisch die atmosphärische Luft ist und diese Luft zumindest beim Zuführen in einen Druckspeicher (11, 15) oder beim Entnehmen aus einem Druckspeicher (11, 15) luftreinigenden Verfahren mittels luftreinigender Mittel unterzogen ist.

12. System zur Speicherung und Wiedergewinnung von Energie, aufweisend Energie erzeugende Mittel, Energie speichernde Mittel (11, 15) und die die Energie aus dem Energie speichernden Mittel wiedergewinnenden Mittel (4, 10), **dadurch gekennzeichnet, dass** als die Energie erzeugenden Mittel vorzugsweise Stromerzeugungsquellen dienen, als die Energie speichernden Mittel Behälter zur Aufnahme von unter Druck stehendem Gasgemisch dienen und das aus den Energie speichernden Mitteln die Energie wiedergewinnendes Mittel ein Reihendruckluftantriebssystem (1) nach einem der Ansprüche 1 bis 11 ist.

13. System zur Speicherung und Wiedergewinnung von Energie nach Anspruch 12, **dadurch gekennzeichnet, dass** als Stromerzeugungsquellen vorzugsweise Windkraftwerke oder Solarkraftwerke dienen.
